# EUROPÄISCHE PATENTSCHRIFT

(11) **EP 1 984 655 B1**
(45) Veröffentlichungstag und Bekanntmachung des Hinweises auf die Patenterteilung: **05.01.2011**
(21) Anmeldenummer: 07704204.2
(22) Anmeldetag: 29.01.2007
(51) Int. Cl.: F16H 61/30

(54) **SCHALTVORRICHTUNG FÜR KRAFTFAHRZEUG-WECHSELGETRIEBE**
SHIFT DEVICE FOR A MOTOR VEHICLE VARIABLE TRANSMISSION
DISPOSITIF DE CHANGEMENT DE VITESSE POUR UNE BOÎTE DE VITESSES DE VEHICULE AUTOMOBILE

(30) Priorität: 14.02.2006 DE 102006006651
(43) Veröffentlichungstag der Anmeldung: 29.10.2008
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2007/050850
(87) Internationale Veröffentlichungsnummer: WO 2007/093494

(56) Entgegenhaltungen:
- DE-A1- 19 539 472
- DE-A1- 19 839 850
- DE-A1- 19 900 820
- DE-B- 2 600 483
- GB-A- 2 110 325

## Beschreibung

Die Erfindung betrifft eine Schaltvorrichtung mit einer Servounterstützungseinrichtung nach dem Oberbegriff von Anspruch 1.

Bei derartigen Schaltvorrichtungen dient die Drehbewegung der Schaltstange zur Vorwahl der einzelnen Schaltgassen und erfordert im Allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegdrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltvorrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

Aus der DE 195 39 471 ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationsphase andauert, kann er unmittelbar spüren. Bei dieser Schaltvorrichtung bleibt die Ansteuerbarkeit der pneumatischen Unterstützungseinrichtung verbesserungsbedürftig.

Aus der DE 19840052 A1 ist eine Schaltvorrichtung mit einer Servounterstützungseinrichtung bekannt geworden, bei der die von der Unterstützungseinrichtung gelieferte Schaltkraft auf eine axial fest in der Schaltvorrichtung angeordnete Hohlwelle übertragbar ist, die die zentrale Schaltwelle umgibt und die mit der zentralen Schaltwelle zum Schalten der Schaltschienen verdrehbar ist. Der Gegenstand der DE 19840052 A1 soll vollinhaltlich hier aufgenommen sein.

Aus der DE 102004042609 A1 sind Kennlinien für eine Servounterstützungseinrichtung für eine Schaltvorrichtung bekannt geworden, die unterschiedliche Steigungen und unterschiedliche Proportionalitäten in bezug auf die einwirkende Handschaltkraft aufweisen. Auch der Gegenstand der DE 102004042609 A1 soll vollinhaltlich hier aufgenommen sein.

Aus der DE 19839854 A1 eine Schaltvorrichtung bekannt geworden, die eine Servounterstützungseinrichtung umfasst, und deren Gegenstand hier auch vollinhaltlich aufgenommen sein soll. Die DE 19839854 A1 sieht eine Druckbegrenzungseinrichtung vor, die zwischen einem Vorratsbehälter und der Servounterstützungseinrichtung vorgesehen ist. Mit dieser Druckbegrenzungseinrichtung wird die der Unterstützungseinrichtung zugeführte Druckluft begrenzt. Durch eine Begrenzung der Druckluft wird eine Begrenzung der Unterstützungskraft erreicht, um eine Anpassung an zulässige Belastungen in den von der Unterstützungskraft beaufschlagten Bauteilen zu erzielen. Insbesondere wird an den Synchronisiereinrichtungen der einzelnen Gangstufen, die von den Schaltschienen beim Schalten mit Unterstützungskraft betätigt werden, eine Reduzierung der Synchronbelastung ermöglicht. Dadurch werden die Reibflächen zur Angleichung der Drehzahlen in den Synchronisierungen nicht so hoch belastet und erhalten eine höhere Standzeit.
Die gezielte Einstellung kann auch derart vorgesehen sein, dass in verschiedenen Schaltgassen unterschiedlich hohe Unterstützungskräfte zur Verfügung gestellt werden. So sind in den niedrigen Gangstufen die notwendigen Unterstützungskräfte größer als in den höheren Gangstufen, was bei einer gleich hohen Unterstützung entweder zu hohen Synchronbelastungen führen kann, oder andererseits zu einer nicht ausreichenden Unterstützung der Handschaltkraft.

Aus der gattungsbildenden GB-A-2 110 325 ist schließlich eine Schaltvorrichtung mit Servounterstützungseinrichtung für ein Getriebe eines Fahrzeuges bekannt geworden mit Mitteln zum Wählen und zum Schalten einer Gangstufe des Getriebes und mit einer Steuerstange der Servounterstützungseinrichtung, auf die eine zu unterstützende Handschaltkraft einwirkt. Vor der Einleitung der zu unterstützenden Handschaltkraft in die Servounterstützungseinrichtung sind Mittel vorgesehen, um die auf die Steuerstange der Servounterstützungseinrichtung einwirkende Kraft zu verändern oder zu begrenzen.

Eine derartig ausgestaltete Schaltvorrichtung ist aufwendig, teuer und erfüllt die Anforderung an eine variable Begrenzung der Servounterstützungskraft nur unzureichend.

Daher liegt der Erfindung die Aufgabe zugrunde, eine Schaltvorrichtung aufzuzeigen, die eine variable und kostengünstige Veränderung und Begrenzung der Servounterstützungskraft ermöglicht.

Die Aufgabe wird gelöst durch eine Schaltvorrichtung mit den Merkmalen von Anspruch 1. Ausgestaltungen sind Gegenstand von Unteransprüchen.

Erfindungsgemäß umfasst eine Schaltvorrichtung mit Servounterstützungseinrichtung für ein Getriebe eines Fahrzeuges Mittel zum Wählen und zum Schalten einer Gangstufe des Getriebes und eine Steuerstange der Unterstützungseinrichtung, auf die die zu unterstützende Handschaltkraft einwirkt. Dabei sind in der Schaltvorrichtung Mittel vorgesehen, um die auf die Servounterstützungseinrichtung einwirkende Handschaltkraft vor der Einleitung in die Servounterstützungseinrichtung zu verändern oder zu begrenzen.

Erfindungsgemäß sind die Mittel zur Veränderung oder zur Begrenzung der einwirkenden Handschaltkraft in der Anordnung eines in die Steuerstange eingreifenden Hebels vorgesehen. Die Schaltwelle wirkt über in Nuten verschiebbare Stifte auf den Hebel ein, wobei in den Nuten elastische Elemente vorgesehen sind, die ein Einwirken der Stifte auf Randbereiche der Nuten an unterschiedlichen axialen Positionen entlang der Nuten mit einer unterschiedlichen Elastizität, und damit unterschiedlichen servounterstützenden Kräften, ermöglichen.

Eine Ausgestaltung sieht vor, dass nebeneinander liegende elastische Elemente auf dem Randbereich einer Seite einer Nut unterschiedliche Elastizitäten aufweisen zur Abbildung unterschiedlicher Servounterstützungskräfte in unterschiedlichen Schaltgassen des Getriebes. Dabei fallen in einer Ausführung die Elastizitäten bei Schaltgassen mit höheren Gangstufen größer aus als bei Schaltgassen mit geringeren Gangstufen.

Eine weitere Ausführungsform sieht vor, dass die elastischen Elemente auf dem Randbereich der einen Seite einer Nut andere Elastizitäten aufweisen, als die elastischen Elemente auf dem Randbereich der gegenüberliegenden Seite der Nut zur Abbildung unterschiedlicher Servounterstützungskräfte bei unterschiedlichen Schaltpositionen in der gleichen Schaltgasse des Getriebes. Dabei fallen in einer Ausführung die Elastizitäten bei Schaltpositionen von höheren Gangstufen größer aus als bei Schaltpositionen von geringeren Gangstufen.

Bei einer vorteilhaften Ausgestaltung sind die elastischen Elemente durch Blattfederlemente gebildet und bei einer anderen Ausgestaltung durch Gummielemente.

Die Erfindung wird anhand einer Zeichnung näher beschrieben.
Es zeigen:
- Fig. 1: eine Schaltanlage nach dem Stand der Technik;
- Fig. 2: einen Schnitt durch die Schaltvorrichtung in einer Ausfüh- rungsform;
- Fig. 3: einen Schnitt in Vorderansicht in einer anderen Ausfüh- rungsform;
- Fig. 4: Details einer Ausführungsform nach Fig. 3;
- Fig. 5: Details einer weiteren Ausführungsform;
- Fig. 6: eine weitere Ausführungsform und
- Fig. 7: Kennlinienverläufe.

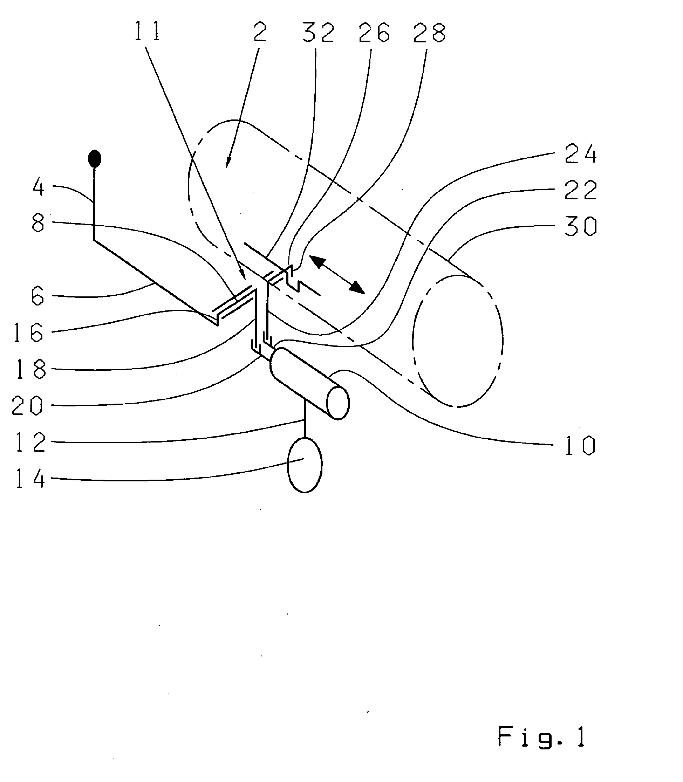

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatischen Servounterstützungseinrichtung 10 weist eine Anschlussleitung 12 auf, die zu einem Vorratsbehälter 14 führt, aus dem die pneumatischen Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

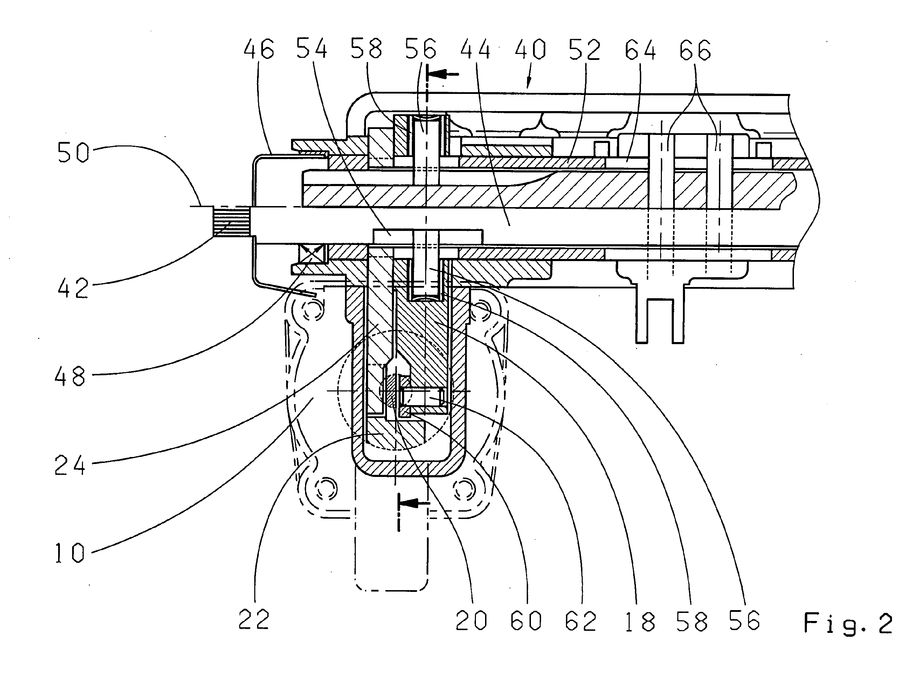

Die Fig. 2 zeigt in einer Draufsicht einen Schnitt durch die erfinderische Schaltvorrichtung 40. Ein hier nicht gezeigter Hebel 16 aus Fig. 1 ist über eine Verzahnung 42 drehfest mit der zentralen Schaltwelle 44 verbunden. Die Schaltwelle 44 greift durch eine Schutzkappe 46 an der Schaltvorrichtung 40 hindurch und wird von einem Wellendichtring 48 an ihrem Umfang abgedichtet. Die Schaltwelle ist um eine Achse 50 drehbar innerhalb einer Hohlwelle 52 gelagert. Die Hohlwelle 52 ist innerhalb der Schaltvorrichtung 40 um die Achse 50 drehbar, aber entlang der Achse 50 axial nicht verschiebbar angeordnet. Die Schaltwelle 44 weist an ihrem Umfang entlang der Achse 50 vorgesehene Nuten 54 auf. In diese Nuten greifen Stifte 56 ein, die ihrerseits in einem Hebel 18 drehbar gelagert sind. Zur Verbesserung der Drehbarkeit sind die Stifte 56 in dem Hebel 18 in Nadelbüchsen 58 gelagert. Die Stifte 56 sind derart in den Nuten 54 angeordnet, dass eine axiale Verschiebung der Schaltwelle 44 entlang der Achse 50 ermöglicht ist, aber eine Verdrehung der Schaltwelle 44 um die Achse 50 ein Verschwenken des Hebels 18 auslöst. Durch die drehbare Lagerung der Stifte 56 werden Reibungsverluste zwischen Stiften 56 und Nuten 54 vermieden und es ist eine leichtgängige axiale Bewegung der Schaltwelle 44 entlang der Achse 50 möglich, selbst wenn die Schaltwelle 44 durch ein Drehmoment beaufschlagt ist, das sich über die Stifte 56 an der pneumatischen Servounterstützungseinrichtung 10 abstützt.

Der Hebel 18 weist eine auf einem Bolzen 62 drehbar angeordnete Rolle 60 auf, die in die Steuerstange 20 der pneumatischen Servounterstützungseinrichtung 10 eingreift. Hierdurch werden Reibungsverluste zwischen dem Hebel 18 und der Steuerstange 20 minimiert, wodurch eine reibungsarme und nahezu verschleißfreie Übertragung der Handschaltkraft auf die pneumatischen Servounterstützungseinrichtung 10 erfolgen kann.
Die von der pneumatischen Servounterstützungseinrichtung 10 erzeugte Verstärkungskraft wird von der Kolbenstange 22 auf den Hebel 24 und von dort auf die Hohlwelle 52 übertragen. Die Hohlwelle 52 weist zwei Langlöcher 64 auf. Durch diese Langlöcher 64 ragen Stifte 66 hindurch, die an dem Hebel 28 befestigt sind, der in die hier nicht gezeigten Schaltschienen 32 eingreift. Die Stifte 66 ragen auch durch Öffnungen in der Schaltwelle 44 hindurch und verdrehen die Schaltwelle 44 und die Hohlwelle 52 gemeinsam. Dabei sind die Öffnungen derart vorgesehen, dass ihre Innenausmaße größer ausgebildet sind als die Außenausmaße der Stifte 66. Dadurch ergibt sich ein geringfügiges Verdrehspiel zwischen der Schaltwelle 44 und der Hohlwelle 52. Hiermit ist sichergestellt, dass über die Schaltwelle 44 und den Hebel 18 die pneumatischen Servounterstützungseinrichtung 10 angesteuert werden kann, ohne dass unmittelbar bereits die Hohlwelle 52 von der Schaltwelle 44 mitgedreht werden muss. Wenn der Verstellweg an der Steuerstange 20 überschritten ist, wird jedoch eine sichere Überbrückung der pneumatischen Servounterstützungseinrichtung 10 erreicht, beispielsweise bei Ausfall der Unterstützung oder wenn bei weiter gesteigerter Handschaltkraft diese direkt auf die Synchronisierungen übertragen wird.
Die Langlöcher 64 in der Hohlwelle 52 ermöglichen die axiale Verschiebung der Schaltwelle 44 innerhalb der Hohlwelle 52 und des Hebels 28 und damit die ungehinderte und unverstärkte Wählbewegung.

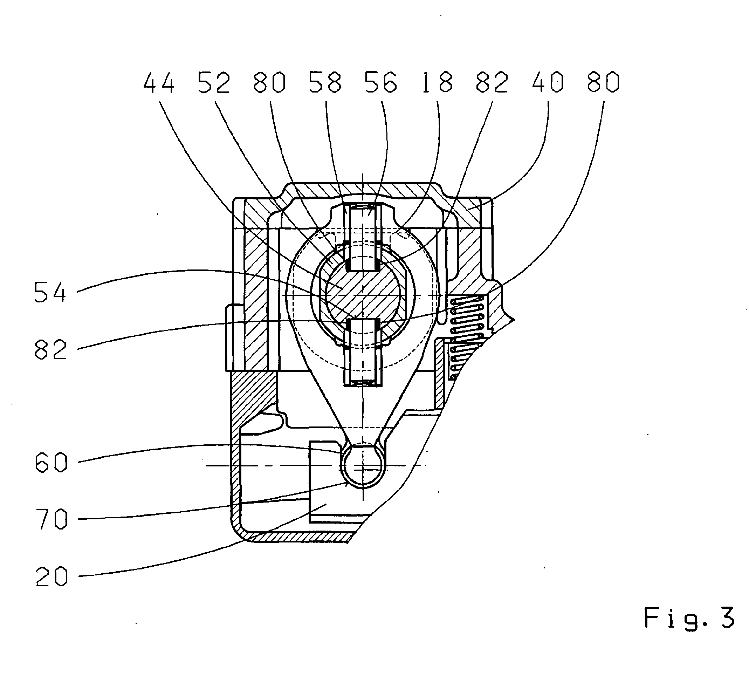

Die Fig. 3 zeigt die Schaltvorrichtung im Schnitt in Seitenansicht. In die Nuten 54 in der Schaltwelle 44 greifen die Stifte 56 ein, die in Nadelbüchsen 58 im Hebel 18 drehbar gelagert sind. Die Schaltwelle 44 wird von der Hohlwelle 52 umschlossen. Der Hebel 18 greift mit einer Rolle 60, die auf einem Bolzen 62 leicht drehbar angeordnet ist, in eine Tasche 70 in der Steuerstange 20 ein und ermöglicht die reibungsarme Übertragung der Handschaltkraft auf die pneumatischen Servounterstützungseinrichtung 10.

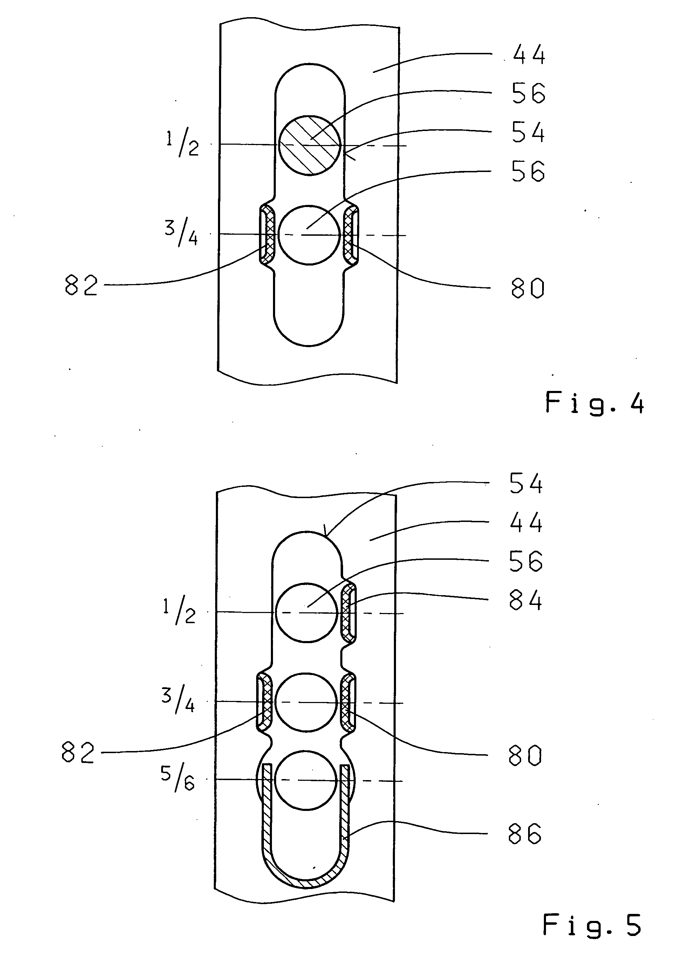

In der Schaltwelle 44 sind in der Nut 54 an den Randbereichen elastische Elemente 80 und 82 angeordnet, die von den Stiften 56 bei Verdrehung der Schaltwelle 44 beaufschlagt werden und die dieser Beaufschlagung der Schaltwelle mit der Handschaltkraft elastisch nachgeben. Die Fig. 4 zeigt die Nut 54 in der Schaltwelle 44. Hier ist der Stift 56 in zwei verschiedenen Positionen angedeutet, er ist aber in der Nut 54 nur einmal vorhanden. Die in der Fig. 4 obere Position stellt die Stellung des Stiftes 56 in der Schaltgasse für die 1. und 2. Gangstufe in einem 4-Gang-Hauptgetriebe dar, während die untere Position die Stellung des Stiftes 56 in der Schaltgasse für die 3. und 4. Gangstufe darstellt. In der oberen Position findet keine Abfederung des Stiftes an den Randbereichen der Nut 54 statt und die Handschaltkraft wird ungedämpft über den Stift 56 auf den hier nicht gezeigten Hebel 18 übertragen.
In der unteren Position der Fig. 4 sind elastische Elemente 80 und 82 an den Randbereichen der Nut 54 vorgesehen, die gleiche oder unterschiedliche Dämpfungsraten aufweisen können. Dadurch kann in einer Schaltgasse für jede Schaltposition dieser Schaltgasse eine unterschiedliche Dämpfung der Handschaltkraft erzielt werden. Durch die elastischen Elemente 80, 82 wird die über die Schaltwelle 44 eingeleitete Handschaltkraft nur gedämpft auf den Stift 56 und damit auf den Hebel 18 übertragen und damit ein gegenüber der Schaltgasse für die 1. und 2. Gangstufe anderer Verlauf der Servounterstützungskraft erreicht.

Die Fig. 5 zeigt eine der Fig. 4 entsprechende Darstellung für ein 6-Gang-Hauptgetriebe. In der oberen Schaltgasse ist in einem Randbereich der Nut 54 kein elastisches Element vorgesehen, weshalb diese Schaltposition beispielsweise der 1. Gangstufe entspricht, bei der die Handschaltkraft ungedämpft übertragen wird. Die zweite Schaltposition in der obersten Schaltgasse weist ein elastisches Element 84 auf, das eine erste Dämpfungsrate aufweist. In der mittleren Schaltgasse sind zwei elastische Elemente 80 und 82 vorgesehen, die beispielsweise eine zweite und eine dritte Dämpfungsrate aufweisen und die elastischer sind als die erste Dämpfungsrate des Elementes 84. In der unteren Schaltgasse schließlich, die Schaltpositionen für die 5. und 6. Gangstufe aufweist, ist ein U-förmiges Federelement 86 vorgesehen, das noch elastischer ausgebildet ist. Dadurch können alle drei Schaltgassen mit unterschiedlichen Elastizitäten ausgebildet sein, wobei die Elastizitäten in den einzelnen Schaltpositionen der mittleren Schaltgasse auch noch unterschiedlich hoch ausgebildet sein können.

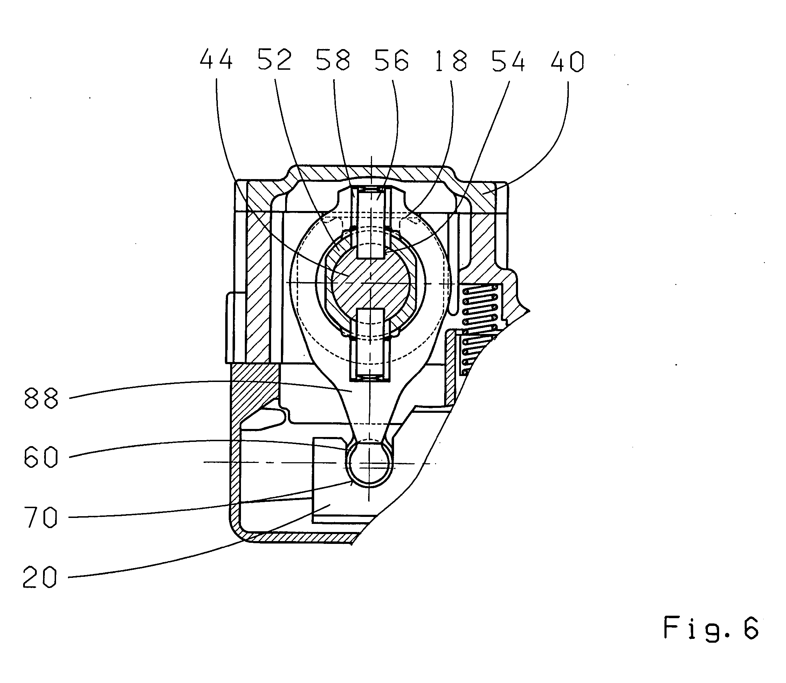

Die Fig. 6 zeigt eine veränderte Darstellung der Anordnung nach Fig. 3. Der Hebel 18 weist in seinem unteren Ende einen elastischen Bereich am Schaft 88 auf, mit dem er in die Steuerstange 20 eingreift. Durch eine entsprechende Ausgestaltung des Schafts 88 auf der linken Seite gegenüber der rechten Seite wird eine unterschiedliche Elastizität erzielt je nach Verdrehrichtung, so dass ünterschiedlichen Schaltpositionen in einer Schaltgasse Rechnung getragen werden kann. Der Fig. 3 entsprechende Elemente sind mit gleichen Bezugszeichen versehen.

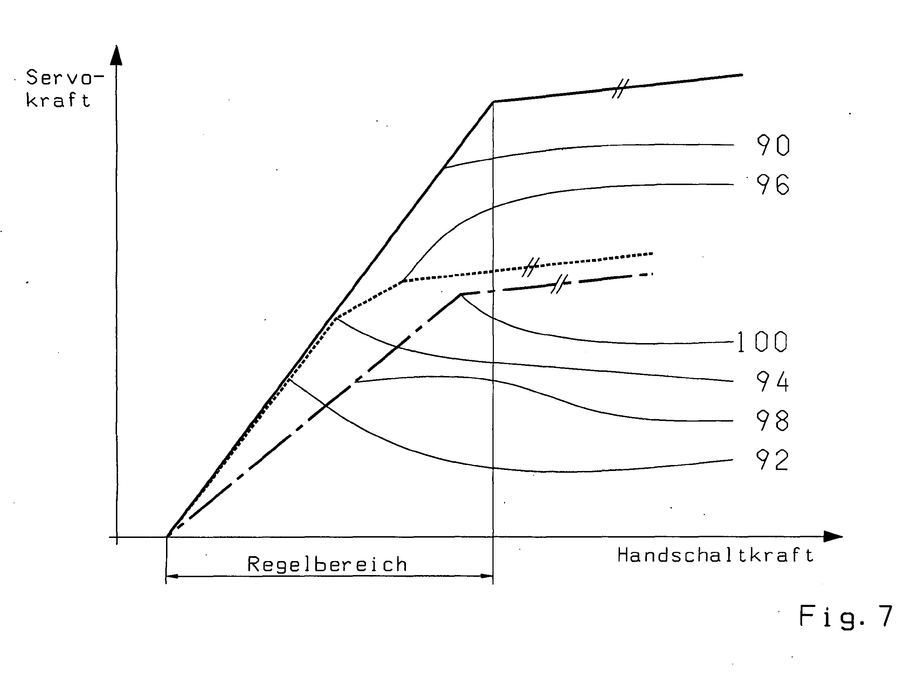

Die Fig. 7 zeigt schematisch den Verlauf der Servounterstützungskraft aufgetragen über der Handschaltkraft. Die in der Servounterstützungseinrichtung konstruktiv vorgegebene Kennlinie 90 ist linear und verläuft stetig steigend bis sie am Ende des Regelbereichs der Servounterstützungseinrichtung in den Bereich der mechanischem Überbrückung übergeht. Die Kennlinie 92 zeigt den Verlauf zunächst gleich bis zum Knickpunkt 94, ab dem die Elastizität wirkt, bis hin zum Knickpunkt 96, ab dem wieder die mechanische Überbrückung wirkt. Die Kennlinie 98 zeigt von Beginn an einen gedämpfteren Verlauf bis hin zum Knickpunkt 100, ab dem die mechanische Überbrückung zu wirken beginnt.

Durch die Begrenzung der einwirkenden Schaltkraft kann auch der in der Servounterstützungseinrichtung erzeugte Druck und dadurch die Servounterstützungskraft beeinflusst werden, so dass sie bestimmte Werte nicht überschreitet.
Durch die Erfindung kann auf die Anordnung teurer Druckbegrenzungsventile gemäß dem Stand der Technik verzichtet werden und für jede Synchronisierung im Getriebe kann ein individueller Verlauf und eine individuelle Begrenzung der maximal zulässigen Servounterstützungskraft erzielt werden. Einem oder mehreren Gängen kann eine genau definierte Elastizität zugeordnet werden, wodurch die Servounterstützung bis hin zur maximalen Servounterstützungskraft angepasst werden kann.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 40: Schaltvorrichtung
- 42: Verzahnung
- 44: Schaltwelle
- 46: Schutzkappe
- 48: Wellendichtring
- 50: Achse
- 52: Hohlwelle
- 54: Nut
- 56: Stift
- 58: Nadelbüchse
- 60: Rolle
- 62: Bolzen
- 64: Langloch
- 66: Stift
- 70: Tasche
- 80: elastisches Element
- 82: elastisches Element
- 84: elastisches Element
- 86: Federelement
- 88: Schaft
- 90: Kennlinie
- 92: Kennlinie
- 94: Knickpunkt
- 96: Knickpunkt
- 98: Kennlinie
- 100: Knickpunkt

## Patentansprüche

1. Schaltvorrichtung (11, 40) mit Servounterstützungseinrichtung (10) für ein Getriebe (30) eines Fahrzeuges, mit Mitteln zum Wählen und zum Schalten einer Gangstufe des Getriebes (30) und mit einer Steuerstange (20) der Servounterstützungseinrichtung (10), auf die eine zu unterstützende Handschaltkraft einwirkt, wobei vor der Einleitung der zu unterstützenden Handschaltkraft in die Servounterstützungseinrichtung (10) Mittel (80, 82, 84, 86, 88) vorgesehen sind, um die auf die Steuerstange (20) der Servounterstützungseinrichtung (10) einwirkende Kraft zu verändern oder zu begrenzen, wobei die Mittel (80, 82, 84, 86) zur Veränderung oder zur Begrenzung der einwirkenden Handschaltkraft in der Anordnung eines in die Steuerstange (20) eingreifenden Hebels (18) vorgesehen sind, **dadurch gekennzeichnet, dass** eine Schaltwelle (44) über in Nuten (54) verschiebbare Stifte (56) auf den Hebel (18) einwirkt und in den Nuten (54) elastische Elemente (80, 82, 84, 86) vorgesehen sind, die ein Einwirken der Stifte (56) auf Randbereiche der Nuten (54) an unterschiedlichen axialen Positionen entlang der Nuten (54) mit einer unterschiedlichen Elastizität ermöglichen.

2. Schaltvorrichtung (11, 40) mit Servounterstützungseinrichtung (10) nach Anspruch 1, **dadurch gekennzeichnet, dass** nebeneinander liegende elastische Elemente (80, 82, 84, 86) auf dem Randbereich einer Seite einer Nut (54) unterschiedliche Elastizitäten aufweisen zur Abbildung unterschiedlicher Dämpfung in unterschiedlichen Schaltgassen des Getriebes (30).

3. Schaltvorrichtung (11, 40) mit Servounterstützungseinrichtung (10) nach Anspruch 2, **dadurch gekennzeichnet, dass** die Elastizitäten bei Schaltgassen mit höheren Gangstufen größer ausfallen als bei Schaltgassen mit geringeren Gangstufen.

4. Schaltvorrichtung (11, 40) mit Servounterstützungseinrichtung (10) nach Anspruch 1, **dadurch gekennzeichnet, dass** die elastischen Elemente (80) auf dem Randbereich der einen Seite einer Nut (54) andere Elastizitäten aufweisen, als die elastischen Elemente (82) auf dem Randbereich der gegenüberliegenden Seite der Nut (54) zur Abbildung unterschiedlicher Dämpfung bei unterschiedlichen Schaltpositionen in der gleichen Schaltgasse des Getriebes (30).

5. Schaltvorrichtung (11, 40) mit Servounterstützungseinrichtung (10) nach Anspruch 4, **dadurch gekennzeichnet, dass** die Elastizitäten bei Schaltpositionen von höheren Gangstufen größer ausfallen als bei Schaltpositionen von geringeren Gangstufen.

6. Schaltvorrichtung (11, 40) mit Servounterstützungseinrichtung (10) nach einem der Ansprüche 1 bis 5, **dadurch gekennzeichnet,**
**dass** die elastischen Elemente (80, 82, 84, 86) durch Blattfederelemente gebildet sind.

7. Schaltvorrichtung (11, 40) mit Servounterstützungseinrichtung (10) nach einem der Ansprüche 1 bis 5, **dadurch gekennzeichnet, dass** die elastischen Elemente (80, 82, 84, 86) durch Gummielemente gebildet sind.

## Claims

1. Shifting device (11, 40) with servo assistance unit (10) for a transmission (30) of a vehicle, having means for selecting and for shifting a gear stage of the transmission (30), having a control rod (20) of the servo assistance unit (10), which control rod (20) is acted on by a manual shift force to be assisted, wherein upstream of the point at which the manual shift force to be assisted is introduced into the servo assistance unit (10) there are provided means (80, 82, 84, 86, 88) for varying or limiting the force acting on the control rod (20) of the servo assistance unit (10), with the means (80, 82, 84, 86) for varying or for limiting the acting manual shift force being provided in the arrangement of a lever (18) which engages into the control rod (20), **characterized in that** a shift shaft (44) acts on the lever (18) via pins (56) which are movable in grooves (54), and elastic elements (80, 82, 84, 86) are provided in the grooves (54), which elastic elements (80, 82, 84, 86) enable the pins (56) to act on edge regions of the grooves (54) with a different elasticity at different axial positions along the grooves (54).

2. Shifting device (11, 40) with servo assistance unit (10) according to Claim 1, **characterized in that** elastic elements (80, 82, 84, 86) situated adjacent to one another on the edge region of one side of a groove (54) have different elasticities in order to realize different damping in different shift slots of the transmission (30).

3. Shifting device (11, 40) with servo assistance unit (10) according to Claim 2, **characterized in that** the elasticities are greater in shift slots with relatively high gear stages than in shift slots with relatively low gear stages.

4. Shifting device (11, 40) with servo assistance unit (10) according to Claim 1, **characterized in that** the elastic elements (80) on the edge region of one side of a groove (54) have different elasticities than the elastic elements (82) on the edge region of the opposite side of the groove (54), in order to realize different damping in different shift positions in the same shift slot of the transmission (30).

5. Shifting device (11, 40) with servo assistance unit (10) according to Claim 4, **characterized in that** the elasticities are greater in shift positions of relatively high gear stages than in shift positions of relatively low gear stages.

6. Shifting device (11, 40) with servo assistance unit (10) according to one of Claims 1 to 5, **characterized in that** the elastic elements (80, 82, 84, 86) are formed by leaf spring elements.

7. Shifting device (11, 40) with servo assistance unit (10) according to one of Claims 1 to 5, **characterized in that** the elastic elements (80, 82, 84, 86) are formed by rubber elements.

## Revendications

1. Dispositif de changement de vitesse (11, 40) avec un dispositif d'assistance par asservissement (10) pour une boîte de vitesses (30) d'un véhicule, comprenant des moyens pour sélectionner et changer un rapport de vitesse de la boîte de vitesses (30) et comprenant une tige de commande (20) du dispositif d'assistance par asservissement (10), sur laquelle agit une force de changement de vitesse manuelle à soutenir, des moyens (80, 82, 84, 86, 88) étant prévus dans le dispositif d'assistance par asservissement (10) avant l'introduction de la force de changement de vitesse manuelle à soutenir, afin de modifier ou de limiter la force agissant sur la tige de commande (20) du dispositif d'assistance par asservissement (10), les moyens (80, 82, 84, 86) pour modifier ou limiter la force de changement de vitesse manuelle appliquée étant prévus dans l'agencement d'un levier (18) s'engageant dans la tige de commande (20), **caractérisé en ce qu'**un arbre de changement de vitesse (44) agit sur le levier (18) par le biais de goupilles (56) déplaçables dans des rainures (54), et des éléments élastiques (80, 82, 84, 86) sont prévus dans les rainures (54), lesquels permettent une action des goupilles (56) avec une élasticité différente sur des régions de bord des rainures (54) dans des positions axiales différentes le long des rainures (54).

2. Dispositif de changement de vitesse (11, 40) avec un dispositif d'assistance par asservissement (10) selon la revendication 1, **caractérisé en ce que** des éléments élastiques (80, 82, 84, 86) juxtaposés présentent différentes élasticités sur la région de bord d'un côté d'une rainure (54), pour produire un amortissement différent dans des voies de changement de vitesse différentes de la boîte de vitesses (30).

3. Dispositif de changement de vitesse (11, 40) avec un dispositif d'assistance par asservissement (10) selon la revendication 2, **caractérisé en ce que** les élasticités dans les voies de changement de vitesse ayant de plus hauts rapports de vitesse sont supérieures aux élasticités dans les voies de changement de vitesse ayant de plus bas rapports de vitesse.

4. Dispositif de changement de vitesse (11, 40) avec un dispositif d'assistance par asservissement (10) selon la revendication 1, **caractérisé en ce que** les éléments élastiques (80) présentent, sur la région de bord d'un côté d'une rainure (54), d'autres élasticités que les éléments élastiques (82) sur la région de bord du côté opposé de la rainure (54), pour produire un amortissement différent dans des positions de changement de vitesse différentes dans la même voie de changement de vitesse de la boîte de vitesses (30).

5. Dispositif de changement de vitesse (11, 40) avec un dispositif d'assistance par asservissement (10) selon la revendication 4, **caractérisé en ce que** les élasticités dans les positions de changement de vitesse de plus hauts rapports de vitesse sont supérieures aux élasticités dans les positions de changement de vitesse de plus bas rapports de vitesse.

6. Dispositif de changement de vitesse (11, 40) avec un dispositif d'assistance par asservissement (10) selon l'une quelconque des revendications 1 à 5, **caractérisé en ce que** les éléments élastiques (80, 82, 84, 86) sont formés par des éléments de ressorts à lames.

7. Dispositif de changement de vitesse (11, 40) avec un dispositif d'assistance par asservissement (10) selon l'une quelconque des revendications 1 à 5, **caractérisé en ce que** les éléments élastiques (80, 82, 84, 86) sont formés par des éléments en caoutchouc.
